# EUROPEAN PATENT APPLICATION

(11) **EP 1 408 502 A2**
(43) Date of publication of application: **14.04.2004**
(21) Application number: 03255339.8
(22) Date of filing: 28.08.2003
(51) Int. Cl.: G11B 20/10, G11B 20/12

(54) **Optical disk drive with increased recording efficiency**

(30) Priority: 25.09.2002 JP 2002278998
(71) Applicant: Sanyo Electric Co., Ltd., Moriguchi-shi, Osaka (JP)
(72) Inventor: Tsukihashi, Akira, Ohra-gun Gunma (JP); Hattori, Kasuki, Kiryu-shi Gunma (JP)
(74) Representative: Cross, Rupert Edward Blount

(57) **Abstract**

An optical disk drive is provided wherein data is recorded in high-density recording mode onto a recordable disk based on a common first standard with the data to be recorded generated by a second recording signal processor (13). When the data to be recorded is audio data based on the first standard, the audio data is recorded with an addition of an error detection code and an error correction code according to the second standard, and is recorded while the audio data is reassigned to sectors corresponding to the amount of user data of the second standard. Although an empty capacity for user data in a final sector of a unit of recording occurs because of the reassignment, this area is filled with specific data.

## Description

### BACKGROUND OF THE INVENTION

### 1. Field of the Invention

The present invention relates to an optical disk drive capable of recording data onto a disk based on a disk format of an existing standard in which the data to be recorded is in a data format compliant with a more efficient data formatting standard than the standard for the disk. In particular, the present invention relates to an optical disk drive suitable for recording data onto a recordable disk based on a CD standard in which the data to be recorded is generated in a data format compliant with a DVD standard.

### 2. Description of the Related Art

As standards for an optical disk where data is optically written/read using an optical head, there are known a CD (compact disc) standard and DVD (digital versatile disc) standards. A DVD realizes, in response to increasing demand for a larger capacity while maintaining structural compatibility with a disk having the same diameter as a CD, a recording density higher than a CD.

A DVD drive for such a DVD ensures upward compatibility with a CD, and most are capable of playing CDs.

Recordable optical disks are available in both CD and DVD systems. Currently, while mass-produced recording systems for CDs have been unified into two standards, the CD-R (CD recordable) standard and the CD-RW (CD rewritable) standard, numerous DVD recording systems continue to co-exist and a de facto standard has not yet been established.

As for the recording capacity of a disk, much more data can be recorded on a DVD than on a CD. As the amount of data in files used on personal computers has increased, the recording capacities of both a CD-R and a CD-RW, which are typically 650 MB and 700 MB, respectively, are more and more commonly found to be insufficient.

However, because the recording systems based on the CD standards have been unified, as described above, and CD-R/CD-RW drives are widely used, LSIs for use as a recording signal processor for a CD-R/CD-RW are available at low prices, and disks for use as a CD-R/CD-RW are also available on the market at low prices.

With this being the situation, to achieve an increased recording capacity of a disk while employing data formats based on the CD standards, more specifically, while employing a modulation code (EFM) and an error correction code (ECC) which are used for a CD, it is suggested that a higher data density than the track density based on the CD standards can be obtained by shortening the length of recording marks, including lands and pits, which are used to record data onto a disk.

### SUMMARY OF THE INVENTION

When an increase in recording capacity is sought while employing a data format of an existing standard as described above, it is possible to use LSIs which are available on the market at low prices for a recording signal processor, to easily design a device, and to use existing disks for use as a CD-R/CD-RW.

However, because format efficiency is a constant for each data format, it is impossible to improve format efficiency to enable data to be recorded on a disk with a higher density. When a laser with a wavelength suitable for the existing standards is used for writing and reading data to and from a disk, it is impossible to substantially shorten the length of recording marks because of the size of laser footprint. Therefore, there has been a problem in that a sufficiently high density cannot be attained.

Thus, a further attempt is made to improve format efficiency to enable data to be recorded on a disk with a high density. However, in this attempt, improper operations will result from a difference between data formats based on the respective standards. One example of the improper operations occurs when audio data is written/read.

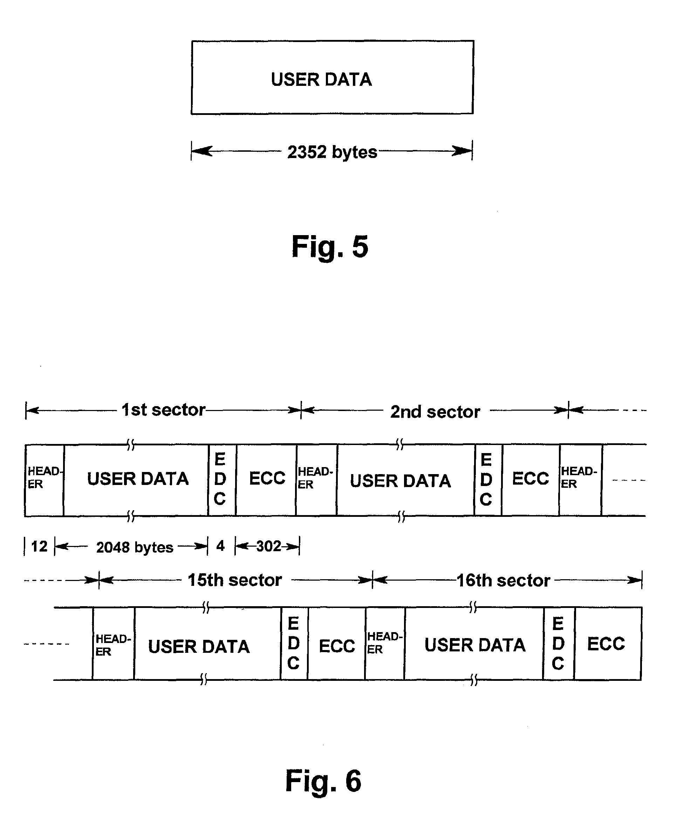

Fig. 5 shows a data structure of audio data (included in one sector) in a data format based on a CD-DA standard which is an audio standard for a CD, after expansion by a decoding process based on the CD-DA standard. In contrast, Fig. 6 shows a data structure of data (included in sixteen sectors) in a data format based on a DVD standard, after expansion by a decoding process based on the DVD standard.

As shown in the drawings, after the decoding process, the data structure based on the CD-DA standard does not include a header, an error detection code (EDC), or an error correction code (ECC), all of which are included in the data structure based on the DVD standard.

Furthermore, the data structures based on the CD-DA and DVD standards differ in that the former contains 2352 bytes of user data while the latter contains 2048 bytes of user data.

For these reasons, one sector of CD-DA data does not fit into one sector based on the DVD standard. In addition, even if the CD-DA data can be recorded in the data format of the DVD standard, there is still a problem in that the data cannot be read without being processed because the data structures differ from each other.

In consideration of the above-described problems, the present invention was conceived to provide an optical disk drive wherein data is written onto a recordable disk based on a disk format of a predetermined standard and according to an existing data format with format efficiency higher than the predetermined standard to thereby enable the data to be written in high-density recording mode, and wherein audio data is written and read to and from a disk according to a data format which differs from that of the audio data.

According to one aspect of the present invention, an optical disk drive comprises a first recording signal processor for performing signal processing on input data so as to generate data to be recorded which is based on a data format compliant with a common first standard and a second recording signal processor for performing signal processing on input data so as to generate data to be recorded which is based on a data format compliant with a second standard having a format efficiency higher than the data format of the first standard, wherein one of the first and second recording signal processors can be selectively used during recording to a recordable disk based on the first standard. When data generated by the second recording signal processor is recorded onto a recordable disk based on the first standard, amounts of user data in each sector differ between the audio data format of the first standard and the data format of the second standard, and the input data to be processed in the second recording signal processor is audio data, the audio data is recorded with an added error detection code and an error correction code according to the data format of the second standard, the audio data is recorded according to the amount of user data of the data format of the second standard while the audio data is reassigned to sectors, and the reassignment is completed by padding with specific data a remaining capacity for user data in a last sector of a unit of recording where last data of a sector unit of the audio data is recorded.

Furthermore, according to another aspect of the present invention, an optical disk drive comprises a first reproducing signal processor for performing signal processing on data read from a disk so as to decode the recorded data based on the data format compliant with the first standard and a second reproducing signal processor for performing signal processing on data read from a disk so as to decode the recorded data based on the data format compliant with the second standard, wherein a determination is made as to whether the data read from the disk based on the first standard is based on the data format compliant with the first standard or the second standard, so that the readout data is supplied to the first reproducing signal processor when the data is determined to be based on the data format compliant with the first standard and the data is supplied to the second reproducing signal processor when the data is determined to be based on the data format compliant with the second standard. Furthermore, when the data is determined to be based on the data format compliant with the second standard, it is determined whether or not the data to be reproduced which is decoded by the second reproducing signal processor is audio data. When the data to be reproduced is identified as audio data, only user data is transferred into a D/A converter at a sampling rate suitable for audio reproduction from a memory storing the data to be reproduced.

### BRIEF DESCRIPTION OF THE DRAWINGS

Fig. 1 is a circuit block diagram showing an embodiment of an optical disk drive according to the present invention.
Fig. 2 is a schematic diagram illustrating a disk format for a CD-R or CD-RW.
Fig. 3 is a schematic diagram illustrating a disk format for a high-density recording mode.
Fig. 4 is a flowchart of a routine for determining the type of a disk in use.
Fig. 5 shows a data structure of audio data in a data format based on a CD-DA standard expanded by a decoding process.
Fig. 6 shows a data structure of data in a data format based on a DVD standard expanded by a decoding process.

### DESCRIPTION OF PREFERRED EMBODIMENT

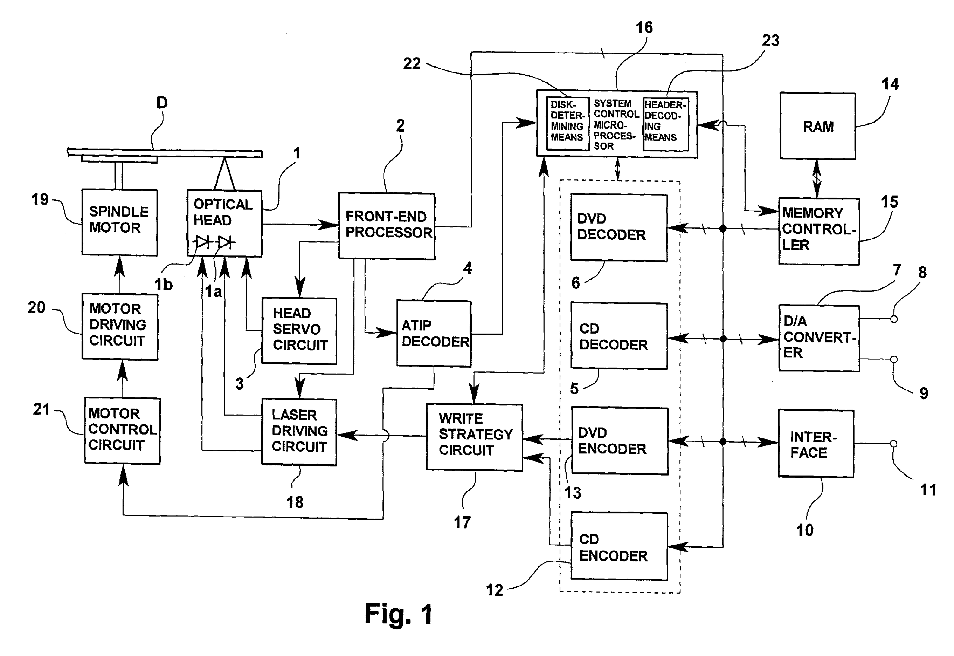

Fig. 1 is a circuit block diagram showing an embodiment of an optical disk drive according to the present invention. The optical disk drive shown in Fig. 1 is a new type of CD-R/CD-RW drive which is capable of writing and reading data to and from a CD and reading data from a DVD, and, at the same time, the drive is capable of performing a recording process and a reproducing process of signals according to a data format based on a DVD standard.

The CD-R/CD-RW drive includes an optical head 1 for writing data to and reading data signals from a disk using a laser emitted for tracing signal tracks formed on the disk. The optical head 1 includes, as light sources, a first laser diode 1a for use in writing and reading data onto and from a CD and a second laser diode 1b for use in reading data from a DVD. The first laser diode 1a emits a beam of focused a laser with a wavelength of 780 nm, and the second laser diode 1b emits a laser beam with a wavelength of 650 nm. The laser beams emitted from the respective laser diodes 1a and 1b are adjustable to be focused on their associated disks such as a CD and a DVD through a dual-focal-length objective lens (not shown).

The optical disk drive further includes a front-end processor 2 which generates an RF signal (radio frequency signal) corresponding to a data signal read from a disk using various types of photoreceiver outputs from the optical head 1, applies a gain control to the RF signal to an optimum level, equalizes the RF signal according to the type of a disk to obtain binary data, and generates a focus error signal representing the amount of deviation of a laser beam emitted from the optical head 1 to a signal surface of the disk, and a tracking error signal representing the amount of deviation of a laser beam from a signal track on a disk.

The optical disk drive further includes a head servo circuit 3. The head servo circuit 3 performs focus control responsive to the focus error signal so that a main beam is focused on a signal surface of a disk, performs tracking control responsive to the tracking error signal so that the main beam traces a signal track of a disk, and performs thread advance control so that the optical head 1 is advanced in a radial direction of a disk.

The optical disk drive further includes an ATIP (absolute time in pre-groove) decoder 4 for decoding a wobble signal sampled from a pre-groove on a CD-type recordable disk (CD-R or CD-RW) using the front-end processor 2, to obtain an ATIP address as an address for providing time information.

The optical disk drive further includes a CD decoder 5. The decoder 5 is used to decode data read from a disk using the front-end processor 2, according to a data format defined by a CD standard. The CD standard employs the EFM (eight to fourteen modulation) code as a modulation code, and also employs the CIRC (cross interleaved Reed-Solomon code) as an error correction code. Thus, the CD decoder 5 decodes data according to these modulation and error correction codes.

The optical disk drive further includes a DVD decoder 6. The decoder 6 is used to decode data read from a disk using the front-end processor 2, according to a data format defined by a DVD standard. The DVD standard employs the EFM-Plus (eight to sixteen modulation) code as a modulation code, and also employs the RS (Reed-Solomon) product code as an error correction code. Thus, the DVD decoder 6 decodes data according to these modulation and error correction codes.

The optical disk drive further includes a D/A converter 7 for converting digital audio data to analog data and outputting the analog data from audio output terminals 8 and 9. The digital-to-analog conversion is carried out after audio data based on the CD-DA standard is obtained through decoding by the CD decoder 5 or the DVD decoder 6.

The optical disk drive further includes an interface 10 for controlling data transfer between the drive and a host device such as a personal computer. Connection between the interface 10 and the host device is established via a connecting terminal 11.

The optical disk drive further includes a CD encoder 12. The CD encoder 12 is used to encode input data input through the interface 10, according to a data format defined by a CD standard, to thereby generate CD data with a data structure based on the CD data format.

The optical disk drive further includes a DVD encoder 13 . The DVD encoder 13 is used to encode input data input through the interface 10, according to a data format defined by a DVD standard, to thereby generate DVD data with a data structure based on the DVD data format.

The optical disk drive further includes a RAM 14, a memory controller 15, and a system control microprocessor 16. The RAM 14 is used to temporarily store the data input through the interface 10, and is used while the CD encoder 12 or the DVD encoder 13 encodes data and while the CD decoder 5 or the DVD decoder 6 decodes data. The RAM 14 is also used to store the decoded data to be reproduced. The memory controller 15 controls writing and reading of data onto and from the RAM 14. The system control microprocessor 16 controls the overall system for writing and reading data onto and from a disk.

The optical disk drive further includes a write strategy circuit 17 and a laser driving circuit 18. The write strategy circuit 17 is used to control light emission power from the optical head 1 to thereby perform an optimum write operation for a disk in consideration of recording characteristics of disks including a CD-R and a CD-RW. When playing a CD or a DVD, the laser driving circuit 18 is used to drive the first or second laser diode 1a or 1b under the control of an APC (automatic power control) circuit (not shown) which is included in the front-end processor 2 . When recording to a CD, the laser driving circuit 18 is used to drive the first laser diode 1a of the optical head 1 responsive to a pulse signal generated from the write strategy circuit 17.

The optical disk drive further includes a spindle motor 19 for rotationally driving a disk, a motor driving circuit 20 for driving the spindle motor 19, and a motor control circuit 21 for controlling the motor driving circuit 20. The motor control circuit 21 is capable of controlling rotation in constant linear velocitymode using a bit clock and a synchronization signal sampled from data signals stored on a disk, or in synchronization with an ATIP signal decoded by the ATIP decoder 4. The motor control circuit 21 is also capable of controlling rotation in constant angular velocity mode using a pulse signal generated responsive to rotation of the spindle motor 19.

Having such a structure, the optical disk drive shown in Fig. 1 is not only capable of playing a CD and a DVD and capable of recording on a CD-R or CD-RW disk in normal recording mode compliant with either CD standard, but is also capable of recording on a CD-R or CD-RW disk in a high-density recording mode in which data generated in a DVD data format is recorded.

Although in the above-described configuration, the optical disk drive is not adapted to DVD recording as commonly understood, that is, recording of data onto a recordable DVD, it should be understood that the optical disk drive can easily be adapted to enable such DVD recording.

A disk format for CD-R/CD-RW disk will now be described.

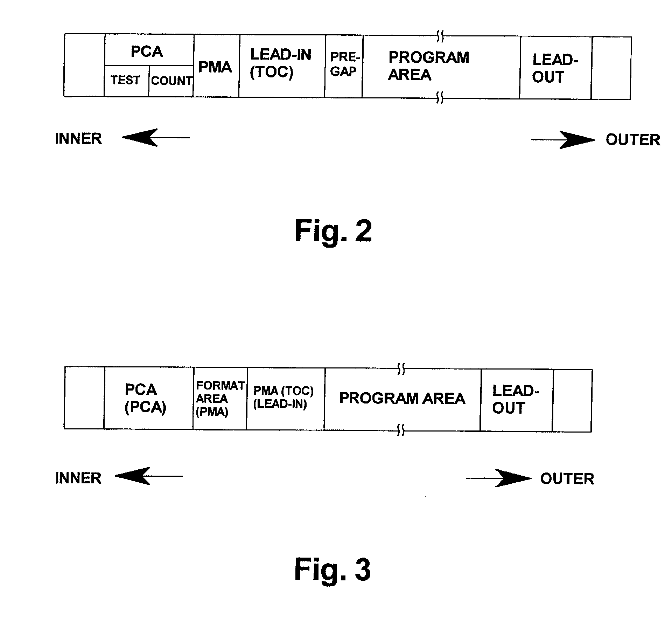

As shown in Fig. 2, a CD-R/CD-RW disk is formed in a disk format such that a PCA (power calibration area), a PMA (program memory area), a lead-in area, a pre-gap area, a program area, and a lead-out area are included in this order from an inner region of the disk.

The PCA includes a test area where test writing is carried out and a counter area where a count of how many times test writing has been carried out is stored. The PMA is used as an area for temporarily storing disk information on a track and data now in the process of being recorded onto a disk until a session closes. The lead-in area is used to record the disk information stored in the PMA as a TOC (table of contents) at the close of the session.

On the other hand, a disk format to be employed for high-density recording mode is of a specific type which differs from that for a CD-R/CD-RW.

As shown in Fig. 3, the disk format for high-density recording mode includes a PCA, a format area, a PMA (including a TOC area) , a program area, and a lead-out area. These areas are formed in this order from an inner region of a disk.

Comparing this disk format with the disk format of an ordinary CD-R/CD-RW (for normal recording mode), the PCA corresponds to the PCA, the format area corresponds to the PMA, and the PMA (including the TOC area) corresponds to the lead-in area. In Fig. 3, the corresponding areas in the CD-R/CD-RW disk format are shown in brackets.

In the disk format for high-density recording, the lead-in area in the disk format for a CD-R/CD-RW is used as the PMA including the TOC area. The PMA has a main channel for recording PMA data (PMD), which also functions as the TOC data in the disk format for a CD. After the close of a session, the PMA data is used as data (PMD) corresponding to the TOC data (in this case, a lead-in of the PMA data is provided at the beginning).

A format command specific to high-density recording mode is executed for entirely padding the format area with specific data unrelated to the PMA. The specific data may consist of, for example, a string of zeroes or device information data, such as a manufacturer identifying code, a model number, a serial number, a code indicating that a disk format is for high-density recording mode.

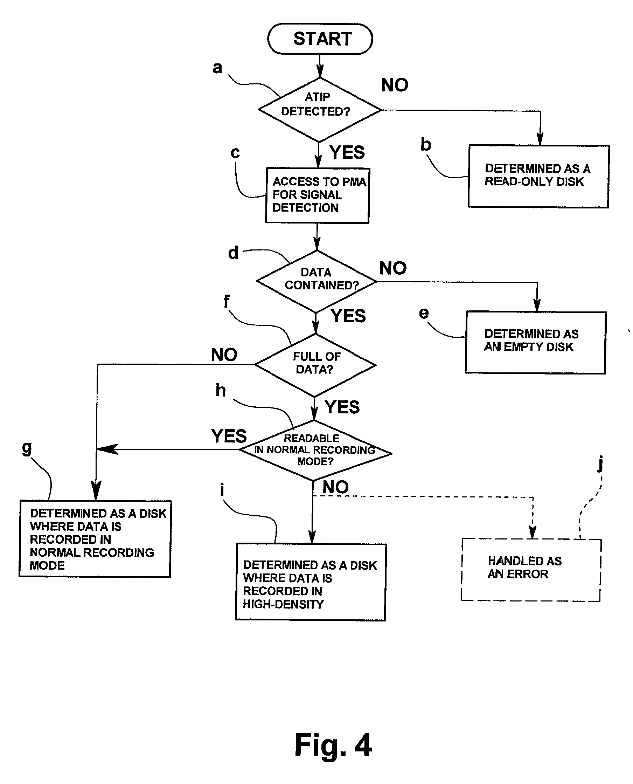

Next, referring to Fig. 4, an operation of the optical disk drive shown in Fig. 1 will be described. Fig. 4 shows a flowchart of a routine for determining the type of a disk in use.

When a disk is inserted, the first laser diode 1a of the optical head 1 is driven by the laser driving circuit 18 so as to reach a playable condition according to the amount of light reflected from the disk. The ATIP signal on the disk is detected, enabling disk-determining means 22 to determine whether the disk is a recordable disk or a read-only disk (step a). If the ATIP signal is not detected at this step, it is determined that the disk is a read-only disk (step b).

In addition, when the disk is determined as a read-only disk, a further operation is performed to determine whether the disk is a CD or a DVD.

If the ATIP signal is detected in the process of step a, the disk is determined to be a recordable disk, more specifically, a CD-R or a CD-RW disk. After this has been determined, the PMA in the disk format on the recordable CD is accessed in an attempt to detect a signal in this area (step c).

Then, it is determined whether or not the PMA contains data (step d) . If at this step it is determined that the PMA contains no data, the disk is determined to be an empty disk (step e).

On the other hand, if it is determined that the PMA contains data, it is subsequently determined as to whether or not the entire area of the PMA contains recorded data (step f).

If it is determined that the PMA is not completely full of data, it is determined that the disk is written in a normal recording mode (step g).

If the PMA is found to be filled with data, it is then determined whether or not the data is readable by attempting to decode the data in a manner appropriate for PMA data written in a normal recording mode (step h) .

When data in the PMA determined to be full of data is written in normal recording mode, it is next determined as to whether or not the data is readable by attempting to decode in a manner suitable for the PMA. If the data is not readable and is determined to be data unrelated to the PMA for normal recording mode, it is determined that the data was writtenon the diskusing a high-density recording mode (step i) . On the other hand, if the data is readable and is determined as being relevant to the PMA for normal recording mode, it is determined that the data was written on the disk in a normal recording mode (step g).

As a consequence, when it is determined that data was written on the inserted disk in a high-density recording mode, or that the disk is an empty disk, it is determined that data can be written on the disk using a high-density recording mode, and, when it is determined that data was written on the inserted disk using a normal recording mode, or, again, that the disk is an empty disk, it is determined data can be written on the disk using a normal recording mode.

Next, a write operation in a normal recording mode will be described.

The host device connected to the connecting terminal 11 sends a write command, and thereby requests writing of data onto a disk in the normal recording mode. In response to the request, the system control microprocessor 16 sets conditions for the writing of data onto a disk according to the disk format for a recordable CD. More specifically, the system control microprocessor 16 switches the circuits to the settings for writing data onto a disk in the normal recording mode, and selects a recording signal processing system which incorporates the CD encoder 12.

In the front-end processor 2, the head servo circuit 3, the write strategy circuit 17, and the laser driving circuit 18, the respective settings are selected so as to enable an operation suitable for the writing of data onto a disk in the normal recording mode according to the determined type of the disk.

In order to enable a write operation at a recording speed requested by the write command sent from the host device, the motor control circuit 21 controls the motor driving circuit 20 so that the disk is driven at a rotational speed corresponding to the recording speed set by the system control microprocessor 16.

The write strategy circuit 17 controls the laser driving circuit 18 according to the set recording speed, so that the light emission power from the first laser diode 1a of the optical head 1 is set to a recording level which is preset to correspond to the recording speed.

Before the writing of data onto a disk is initiated, the PMA on the disk is searched using ATIP information. Thus, data in the PMA is read to confirm that a session has not closed. Also, disk information data is retrieved to ascertain whether or not additional data can be written onto the disk, and to obtain an address at which data can be written.

Then, test writing is carried out in the PCA of the disk at the selected recording speed while gradually changing the light emission power. Using the results, the light emission power from the optical head 1 is set to an optimum recording level at which the error rate in reading of the written data is minimized.

If, after preparation for a write operation to the disk as described above is completed, a command requesting a write operation and data are sent from the host device, the optical disk drive receives these command and data via the interface 10. The data requested to be written is stored in the RAM 14 under the control of the memory controller 15.

When the amount of data stored in the RAM 14 reaches an amount for initiating the encoding process, the stored data is read out from the RAM 14 and input to the CD encoder 12 under the control of the memory controller 15. The CD encoder 12 operates under the control of the system control microprocessor 16, and encodes the input data to generate CD data having a data structure based on a data format defined by the CD standard.

The CD data is supplied to the write strategy circuit 17. The write strategy circuit 17 generates recording pulses based on the CD data in consideration of the recording characteristics of a CD-R or a CD-RW according to the type of the disk, so as to write the data onto the disk at the optimum recording level which is selected through the test writing in the PCA. The recording pulses are used to drive the first laser diode 1a of the optical head 1, thereby enabling the data to be written onto the disk. In other words, recording marks based on the CD data are formed on the disk responsive to the recording pulses.

Next, a write operation in the high-density recording mode will be described wherein data based on a data format for a DVD is written onto a disk such as a CD-R or CD-RW disk.

When a disk is determined to be capable of being written on in a high-density recording mode, and the host device connected to the connecting terminal 11 sends a write command and thereby requests writing of data onto the disk in the high-density recording mode, in response to the request, the system control microprocessor 16 sets conditions for writing data onto the disk according to the disk format for the high-density recording mode. More specifically, the system control microprocessor 16 switches the circuits to the settings for writing data onto the disk in the high-density recording mode, and selects a recording signal processing system which incorporates the DVD encoder 13.

In the front-end processor 2, the head servo circuit 3, the write strategy circuit 17, and the laser driving circuit 18, the respective settings are selected so as to enable an operation suitable for the writing of data onto a disk in the high-density recording mode and according to the determined type of the disk.

In order to enable a write operation at a requested recording speed, as in the case of the normal recording mode, the motor control circuit 21 controls the motor driving circuit 20 so that the disk is driven at a rotational speed corresponding to the recording speed set by the system control microprocessor 16. The write strategy circuit 17 controls the laser driving circuit 18 according to the set recording speed, so that the light emission power from the first laser diode 1a of the optical head 1 is set to a recording level which is preset to correspond to the recording speed.

In this regard, the writing in high-density recording mode is permitted only when the disk is determined to be capable of being written on in the high-density recording mode through the above-described determination steps. Before the write operation of data onto a disk is initiated, the PMA on the disk is searched using ATIP information.

In the disk format for the high-density recording mode, as shown in Fig . 3, the PMA is located in an area corresponding to the lead-in area in the disk format for a recordable CD. Therefore, this area is searched for PMA data. As in the case of the normal recording mode, PMA data in this area is read to confirm that a session has not closed. Also, disk information data is retrieved to ascertain whether or not additional data can be written onto the disk, and to obtain an address at which data can be written.

Then, test writing is carried out in the PCA of the disk according to the disk format for the high-density recording mode at the selected recording speed while gradually changing the light emission power. Based on the results of the test writing, the light emission power from the optical head 1 is set to an optimum recording level such that the error rate in reading the written data is minimized.

As described in Japanese Patent Laid-Open Publication No. 2002-56617, which was filed by the present applicant, in the high-density recording mode, an actual recording address is calculated by multiplying an address A of ATIP by a recording density, and every unit of data is recorded using this actual recording address. Thus, a recording density per unit period is increased. In this operation, if a recording density to be used in multiplication is preset to n times (n > 1) the normal density, an actual recording address is equivalent to n times the address A of ATIP.

If, after preparation for writing data onto the disk as described above is completed, a command requesting a write operation and data are sent from the host device, the optical disk drive receives these command and data via the interface 10, and the data requested to be written is stored in the RAM 14.

When the amount of data stored in the RAM 14 reaches an amount for initiating the encoding process, the stored data is read out from the RAM 14. The DVD encoder 13 encodes the data to generate DVD data having a data structure based on a data format defined by the DVD standard.

The DVD data is supplied to the write strategy circuit 17. The write strategy circuit 17 generates recording pulses based on the DVD data in consideration of the recording characteristics of a CD-R or a CD-RW according to the type of the disk, so as to enable writing of the data onto the disk at the optimum recording level which is selected through the test writing in the PCA. The recording pulses are used to drive the first laser diode 1a of the optical head 1, thereby enabling the data to be written onto the disk. In other words, recording marks based on the DVD data are formed on the disk responsive to the recording pulses.

Furthermore, in the high-density recording mode, the data to be recorded in the program area is written in a file structure based on the ISO 9660 standard for logical formatting of a CD-ROM. A minimum unit of a sector is 2 kbytes, and a unit of recording is 32 kbytes, as required to generate an error correction code. When a write operation terminates with a file having a size less than 32 kbytes, the write operation is completed by padding with zeros to assure that 32 kbytes of data are included in each unit of recording.

In this regard, the data format defined by the DVD standard includes less redundancy than the data format defined by the CD standard. Because of this difference in redundancy between these data formats, the data format of the DVD standard has a format efficiency 1.49 times that of the CD standard.

As described above, in the high-density recording mode, the actual recording address for data to be written onto a disk is n times (n > 1) the corresponding address of ATIP. Thus, even with the same track pitch, a linear recording density of the data to be written onto the disk is increased.

In such a case, although a significant improvement in linear recording density cannot be realized because of the use of 780 nm wavelength laser suitable for the CD format, it is advantageous that inexpensive optical heads originally designed for CD recording can be used. Furthermore, because the format efficiency is improved as compared with that for a CD, assuming that high-density recording mode provides a 1.35 factor improvement in the linear recording density over the normal recording mode, the overall improvement equals improvement of 1.35 multiplied by the format efficiency of 1.49, which is equal to a factor of 2.01. Thus, the high-density recording mode can be used to record at a recording density approximately twice that of the normal recording mode.

A write operation of CD-DA data using the above-described high-density recording mode will be further explained in more detail.

When data to be recorded is CD-DA data, the host device sends 2352 bytes of audio data per sector (having a data structure shown in Fig. 5) . The audio data is written into the RAM 14 under the control of the memory controller 15.

When the amount of data stored in the RAM 14 reaches an amount for initiating the encoding process, or, more specifically, when the amount of data stored in the RAM 14 reaches an amount equivalent to 16 sectors of user data (2048 bytes) based on the data format for a DVD, that is, 32 kbytes, which is calculated by multiplying 2048 bytes by 16, the stored data is read out from the RAM 14 under the control of the memory controller 15 . This data is then encoded using the DVD encoder 13.

According to the data format of a DVD standard, the DVD encoder 13 adds headers, error detection codes, and error correction codes to the input data using the RAM 14 to thereby convert the data into data having a data structure shown in Fig . 6 . Then, modulation is performed on the resultant data using the EFM-Plus (8-16) code to generate DVD data.

Then, data to be written is recorded onto the disk based on the DVD data.

In this regard, the amount of one sector of data which is sent by the host device according to the CD-DA standard is 2352 bytes, whereas the amount of user data to be written is 2048 bytes according to the DVD standard. As they differ in this manner, per sector 304 bytes of audio data remain to be written. The remaining audio data is sequentially incorporated into the next sector, and reassignment is carried out so that one sector consists of 2048 bytes.

Finally, after the final data of a sector unit of audio data is written into a sixteenth sector as a final sector of a unit of recording, the sector unit is completed by padding a remaining and available capacity for data region with zeroes until the amount of data reaches 2048 bytes.

Thus, even if the amounts of user data per sector differ between the CD-DA standard and the DVD standard, data can be properly recorded onto a disk without losing any data.

Furthermore, when audio data is recorded, an identifier for identifying the data as audio data is added to the header of each sector.

In addition, the lead-in area also records the PMA data which contains identification data for identifying an audio track in which audio data is recorded.

Next, a read operation from a disk will be described.

The host device sends a read command, and thereby requests reading of data from a disk. In response to the request, the system control microprocessor 16 switches the circuits to the settings for reading a disk. More specifically, in the front-end processor 2, the head servo circuit 3, and the laser driving circuit 18, the respective settings are selected so as to enable an operation suitable for the disk to be read, while a laser diode to be used in the optical head 1 and a decoder to be used are selected, so that conditions are set for reading a disk according to the type of disk which is determined through the determination steps when the disk is first inserted.

When the inserted disk is determined to be a read-only CD, or when the disk is determined to be a recordable disk where data is recorded in the normal recording mode, the laser driving circuit 18 drives the first laser diode 1a of the optical head 1 while setting the light emission power to a level suitable for a read operation according to the type of disk. Thus, data is read out from a disk D using the optical head 1.

In the front-end processor 2, the readout signal from the disk D is subjected to signal processing suitable for CD, and an RF signal is converted into a binary signal to generate CD data. The CD data is stored in the RAM 14 under the control of the memory controller 15. Then, the CD data stored in the RAM 14 is decoded by the CD decoder 5 in units for performing error correction (32 kbytes).

On the other hand, the front-end processor 2 generates a focus error signal and a tracking error signal. These signals are generated through steps suitable for CD and then supplied to the head servo circuit 3.

The CD data decoded by the CD decoder 5 is demodulated according to the data format of the CD standard to form request data which is to be sent to the host device.

According to the CD standards, data includes a subcode having an identification code added to the Q signal in a control area for identifying whether the data is CD-DA data or CD-ROM data. The subcode Q signal is decoded during the decoding process by the CD decoder 5, thereby enabling identification of the data being reproduced as either CD-DA data or CD-ROM data.

When the data is CD-ROM data, the CD data decoded by the CD decoder 5 is temporarily stored in the RAM 14 as needed. Subsequently, the data is supplied via the interface 10 to the host device which is connected to the connecting terminal 11.

On the other hand, when the data is CD-DA data, the CD data decoded by the CD decoder 5 is subjected to digital-to-analog conversion by the D/A converter 7 and is converted into an analog signal. The resulting signal is output from the audio output terminals 8 and 9.

Next, an operation in an example wherein the inserted disk is determined to be a DVD will be described.

In this example, the laser driving circuit 18 drives the second laser diode 1b of the optical head 1 while setting the light emission power to a level suitable for a read operation according to the type of disk. Thus, data is read out from a disk D using the optical head 1.

In the front-end processor 2, the readout signal from the disk D is subjected to signal processing suitable for DVD, and an RF signal is converted into a binary signal to generate DVD data. The DVD data is stored in the RAM 14 under the control of the memory controller 15. Then, the DVD data stored in the RAM 14 is decoded by the DVD decoder 6 in units for performing error correction (32 kbytes) .

Furthermore, the front-end processor 2 generates a focus error signal and a tracking error signal. These signals are generated through steps suitable for DVD and then supplied to the head servo circuit 3.

The DVD data supplied to the DVD decoder 6 is demodulated through the decoding process according to the data format of the DVD standard by the DVD decoder 6 to form request data which is to be sent to the host device.

This data is temporarily stored in the RAM 14 as needed, and then supplied via the interface 10 to the host device which is connected to the connecting terminal 11.

Next, an operation in an example wherein the inserted disk is determined as a recordable CD where data is recorded in the high-density recording mode will be described.

In this example, the laser driving circuit 18 drives the first laser diode 1a of the optical head 1 while setting the light emission power to a level suitable for a read operation according to the type of disk. Thus, data is read out from a disk D using the optical head 1.

The reading out of data from the disk D is carried out through steps according to the disk format for the high-density recording mode.

In the front-end processor 2, the readout signal from the disk D is subjected to signal processing suitable for DVD, and an RF signal is converted into a binary signal to generate DVD data. The DVD data is stored in the RAM 14 under the control of the memory controller 15. Then, the DVD data stored in the RAM 14 is decoded by the DVD decoder 6 in units for performing error correction (32 kbytes).

Furthermore, the front-end processor 2 generates a focus error signal and a tracking error signal. These signals are generated through steps suitable for a recordable CD and then supplied to the head servo circuit 3.

The DVD data supplied to the DVD decoder 6 is demodulated through the decoding process according to the data format of a DVD standard by the DVD decoder 6 to form request data which is to be sent to the host device.

This data is temporarily stored in the RAM 14 as needed, and then supplied via the interface 10 to the host device which is connected to the connecting terminal 11.

Next, an operation in an example wherein the inserted disk is determined to be a recordable CD on which CD-DA data is recorded in the high-density recording mode will be described.

In this example, upon insertion of a disk, data is read out from the lead-in area of the disk format for a CD-R/CD-RW. Then, when the PMA data (PMD) is decoded, and if the identification data for identifying an audio track in the PMD is detected, the track is recognized as an audio track.

The readout of data from the disk D is carried out through steps according to the disk format for the high-density recording mode . The front-end processor 2 generates DVD data through signal processing suitable for DVD, and the DVD data is stored in the RAM 14 under the control of the memory controller 15. Then, the DVD data stored in the RAM 14 is decoded by the DVD decoder 6 in units for performing error correction (32 kbytes).

In the decoding process by the DVD decoder 6, header-decoding means 23 provided in the system control microprocessor 16 decodes header information included in each sector. Because the header information includes an identifier indicating that the data is CD-DA data, the DVD data being reproduced is easily recognized as CD-DA data.

As shown in Fig. 6, data to be expanded in the RAM 14 after being decoded by the DVD decoder 6 has a data structure wherein a header, user data, an error detection code (EDC) , and an error correction code (ECC) are included in this order.

When the header-decoding means 23 detects an identifier indicating that the data is CD-DA data, the system control microprocessor 16 provides instructions for the memory controller 15 to transfer only the user data to the D/A converter 7 from among the data expanded in the RAM 14 and to skip the other data while counting the amount of data. At this time, operating clocks to be supplied to the memory controller 15 are based on the sampling frequency of CD-DA data. Thus, the data is transferred to the D/A converter 7 at a sampling rate suitable for CD-DA data.

Consequently, the D/A converter 7 converts only CD-DA data from a digital signal into an analog signal at the sampling rate for CD-DA data so that the audio signal according to the CD-DA data is properly output from the output terminals 8 and 9.

Zeros are used to fill the remaining area for user data in the last sector of a unit of recording is not transferred to the D/A converter 7, because when a predetermined number of zeros representing non-audio signals are consecutively detected, the data can be recognized.

In a case when a recordable CD recorded in the high-density recording mode is inserted into a CD-R/CD-RW drive based on an existing recordable CD standard and the ATIP signal is detected upon insertion of the disk and the disk is determined as a recordable CD, although the PMA data is retrieved, because the PMA is full of data and the retrieved data is not readable, the disk is determined as an abnormal disk. Thus, such a case is handled as an error, as shown in step j and indicated by broken lines in Fig. 4.

Furthermore, although for convenience of illustration the CD decoder 5 , the DVD decoder 6 , the CD encoder 12 , and the DVD encoder 13 are shown in Fig. 1 by separate blocks, these circuits may be usually formed using an LSI where all these circuits are integrated.

As described above, an optical disk drive according to the present invention can record audio data based on a predetermined standard onto a recordable disk based on a disk format of the standard in a high-density recording mode according to a data format having higher format efficiency than the standard.

Furthermore, even when a header, an error detection code, and an error correction code are added to each sector in a high-density recording mode, when the data is audio data, only user data is transferred to the D/A converter at the timing of a sampling frequency while the header, the error detection code, and the error correction code are skipped. Thus, the optical disk drive can play a disk on which audio data is recorded in a high-density recording mode.

In particular, because an identifier for identifying data as audio data is added to a header, a sector wherein audio data is recorded can be reliably identified during replay of the disk.

Furthermore, because identification data is recorded in the lead-in area for identifying an audio track in which audio data is recorded, the optical disk drive can recognize, upon insertion of the disk, whether or not the disk includes an audio track on which audio data is recorded.

## Claims

1. An optical disk drive for recording data onto a disk based on a recordable disk format defined by a first standard with the data to be recorded having a data format compliant with a second standard having efficiency of data format higher than the first standard, the optical disk drive comprising:
a first recording signal processor for performing signal processing on input data so as to generate data to be recorded which is based on a data format compliant with the first standard; and
a second recording signal processor for performing signal processing on input data so as to generate data to be recorded which is based on the data format compliant with the second standard, wherein
one of the first and second recording signal processors can be selectively used during recording to a recordable disk based on the first standard, and,
when data generated by the second recording signal processor is recorded onto a recordable disk based on the first standard, amounts of user data in each sector differ between an audio data format of the first standard and the data format of the second standard, and the input data to be processed in the second recording signal processor is audio data, the audio data is recorded with an added error detection code and error correction code according to the data format of the second standard, the audio data is recorded according to the amount of user data of the data format of the second standard while the audio data is reassigned to sectors, and the reassignment is completed by filling, with specific data, any remaining capacity for user data in a final sector of a unit of recording where the final data of a sector unit of the audio data is recorded.

2. An optical disk drive according to Claim 1, wherein the data format of the second standard defines a header in each sector, and, when audio data is recorded as user data, an identifier is added to the header for identifying the data as audio data.

3. An optical disk drive according to Claim 1, wherein the recordable disk format of the first standard defines a lead-in area, and identification data is recorded in the lead-in area for identifying an audio track in which audio data is recorded.

4. An optical disk player for reading a disk which is based on the recordable disk format defined by the first standard and wherein audio data based on the data format compliant with the second standard is recorded using the optical disk drive according to Claim 1, the optical disk player comprising:
a first reproducing signal processor for performing signal processing on data read from the disk so as to decode the recorded data based on the data format compliant with the first standard; and
a second reproducing signal processor for performing signal processing on data read from the disk so as to decode the recorded data based on the data format compliant with the second standard, wherein
a determination is made as to whether the data read from the disk based on the first standard is based on the data format compliant with the first standard or the second standard, so that the data is supplied to the first reproducing signal processor when the data is determined to be based on the data format compliant with the first standard and the data is supplied to the second reproducing signal processor when the data is determined to be based on the data format compliant with the second standard, and
when the data is determined to be based on the data format compliant with the second standard, it is determined whether or not the data to be reproduced as decoded by the second reproducing signal processor is audio data, and, when it is determined that the data to be reproduced is audio data, only user data is transferred into a D/A converter at a sampling rate suitable for audio reproduction from a memory storing the data to be reproduced.
